# EUROPÄISCHE PATENTANMELDUNG

(11) **EP 3 336 213 A1**
(43) Veröffentlichungstag der Anmeldung: **20.06.2018**
(21) Anmeldenummer: 17197075.9
(22) Anmeldetag: 18.10.2017
(51) Int. Cl.: C22C 38/00, B29D 23/00, C21D 6/00, C21D 9/00, C21D 9/08, C22C 38/02, C22C 38/04, C22C 38/18, C22C 38/26, C22C 38/34, C22C 38/38, F16L 1/00, F16L 1/024, F16L 1/06, C21D 9/14, C21D 8/10, C23C 2/00, C23C 2/06, C21D 1/00, C21D 1/26, C21D 1/28

(54) **ROHRELEMENT FÜR HYDRAULIK- ODER PNEUMATIKLEITUNG ODER FÜR TRANSPORTLEITUNG, VERWENDUNG DES ROHRELEMENTES UND VERWENDUNG EINES WERKSTOFFES ZUR HERSTELLUNG EINES ROHRELEMENTES**

(30) Priorität: 19.12.2016 DE 102016124852
(71) Anmelder: Benteler Steel/Tube GmbH, 33104 Paderborn (DE)
(72) Erfinder: Brabander, Helwig, 33154 Salzkotten (DE); Walterfang, Marco, 33102 Paderborn (DE); Müller, Edgar, 59558 Lippstadt (DE); Balun, Jozef, 33189 Schlangen (DE)
(74) Vertreter: Müller & Schubert

(57) **Zusammenfassung**

Die vorliegende Erfindung betrifft ein Rohrelement für eine Hydraulikleitung oder eine Pneumatikleitung und ein Rohrelement für eine Transportleitung. Das Rohrelement ist dadurch gekennzeichnet, dass das Rohrelement aus einem bainitischen Werkstoff besteht und das Rohrelement (10) eine Dehngrenze Rp0,2 von mindestens 550 MPa, eine Zugfestigkeit Rm von mindestens 850 MPa, eine Bruchdehnung A5 von mindestens 15% und eine Kerbschlagarbeit Av bei 0°C von mindestens 27 J aufweist. Des Weiteren werden die Verwendung des Rohrelementes in einer Hydraulikleitung oder Pneumatikleitung oder Transportleitung sowie die Verwendung eines Werkstoffes zur Herstellung eines erfindungsgemäßen Rohrelementes beschrieben.

## Beschreibung

Rohre, durch die Medien geführt werden, werden auch als medienführende Rohre oder Leitungsrohre bezeichnet.

Insbesondere werden Rohre in Leitungen verwendet, in denen Medien, wie Gase oder Flüssigkeiten transportiert werden. In diesem Fall werden die Rohre auch als Transportrohre bezeichnet. Das Medium kann insbesondere durch eine Pumpe, die mit dem Transportrohr verbunden ist, in dem Transportrohr transportiert werden. Insbesondere kommen solche Transportrohre beispielsweise bei Schiffen, insbesondere bei Tankern zum Einsatz. Beispielsweise werden auf einem Tanker Rohrleitungen mit Anschlüssen für die Schläuche zum Löschen der Ladung vorgesehen. Die Transportrohre zusammen mit der oder den zum Transport vorgesehenen Pumpen kann auch als Transportsystem bezeichnet werden. Derzeit werden für diese Zwecke beispielweise Stahlrohre aus E355 verwendet. Die Anforderungen an die Systemleistungen von Transportsystemen steigen und zudem besteht auch ein Bestreben, das Gewicht von Komponenten von Transportsystemen, insbesondere Transportrohren zu verringern.

Zudem werden heutzutage als medienführende Rohre beispielsweise in der Hydraulik und Pneumatik Rohre verwendet, um Medien bei den für die Funktion erforderlichen Betriebsdrücken transportieren zu können. Diese Rohre bestehen beispielsweise aus Vergütungsstahl. Die Anforderungen an die Systemleistungen steigen und zudem besteht auch ein Bestreben, das Gewicht von Komponenten von Hydraulik- oder Pneumatikrohren zu verringern.

Aufgabe der vorliegenden Erfindung ist es daher eine Lösung zu schaffen, die zumindest diese Anforderungen adressiert und die dennoch eine ausreichende Sicherheit des jeweiligen Systems gewährleistet.

Gemäß einem ersten Aspekt wird die Aufgabe gelöst durch ein Rohrelement für eine Hydraulik-Leitung oder Pneumatik-Leitung. Das Rohrelement ist dadurch gekennzeichnet, dass das Rohrelement aus einem bainitischen Werkstoff besteht und das Rohrelement (10) eine Dehngrenze Rp0,2 von mindestens 550 MPa, eine Zugfestigkeit Rm von mindestens 850 MPa, vorzugsweise mindestens 900 MPa, eine Bruchdehnung A5 von mindestens 15%, vorzugsweise mindestens 18%, und eine Kerbschlagarbeit Av bei 0°C von mindestens 27 J aufweist.

Gemäß einem weiteren Aspekt wird die Aufgabe gelöst durch ein Rohrelement für eine Transportleitung, dadurch gekennzeichnet, dass das Rohrelement aus einem bainitischen Werkstoff besteht und das Rohrelement (10) eine Dehngrenze Rp0,2 von mindestens 550 MPa, eine Zugfestigkeit Rm von mindestens 850 MPa, eine Bruchdehnung A5 von mindestens 15% und eine Kerbschlagarbeit Av bei 0°C von mindestens 27 J aufweist.

Im Folgenden wird - sofern nicht anders angegeben - ein Rohrelement für eine Hydraulik-Leitung oder ein Rohrelement für eine Pneumatik-Leitung oder ein Rohrelement für eine Transportleitung einfach als Rohrelement bezeichnet. Ebenso wird - sofern nicht anders angegeben - ein Hydrauliksystem oder ein Pneumatiksystem oder ein Transportsystem einfach als System bezeichnet.

Hydraulikrohre der heutigen Generation besitzen maximale Dehngrenzen von 500 MPa und maximale Zugfestigkeiten von 700 MPa mit Kerbschlagarbeiten >=27J bei 0°C. Das Grundgefüge dieser Werkstoffe besteht hauptsächlich aus Ferrit und Perlit (Anteil Ferrit + Perlit > 90 %). Auch Transportrohre besitzen heutzutage diese Eigenschaften.

Indem das erfindungsgemäße Rohrelement eine Dehngrenze von mindestens 550 MPa und eine Zugfestigkeit von mindestens 850 MPa, vorzugsweise mindestens 900 MPa, aufweist und dessen Bruchdehnung A5 bei mindestens 15 % liegt und eine Kerbschlagarbeit Av bei 0°C von mindestens 27 J aufweist, kann ohne die Sicherheitsanforderungen zu verletzen, eine Hydraulik- und/oder Pneumatikleitung oder eine Transportleitung geschaffen werden, bei der das Rohrelement eine geringere Wandstärke aufweist. Hierdurch kann das Gewicht verringert werden und dennoch können die Sicherheitsanforderungen erfüllt werden. Alternativ oder zusätzlich kann durch die mechanischen Eigenschaften, die das Rohrelement aufweist, bei gleicher Wandstärke oder auch bei verringerter Wandstärke der Betriebsdruck erhöht werden, ohne dass es zu einer Beschädigung des Rohrelementes kommt. Hierdurch kann die Systemleistung des Systems, in dem das Rohrelement eingesetzt wird, das heißt Hydraulik- und / oder Pneumatik-System oder Transportsystem, erhöht werden. Indem das Rohrelement eine Zugfestigkeit von mindestens 850 MPa aufweist, kann eine ausreichende Festigkeit gewährleistet werden, die den Beanspruchungen, insbesondere dem hohen Innendruck, der auf das Rohrelement wirken kann, standhalten kann.

Die Bruchdehnung des Rohrelementes liegt erfindungsgemäß bei mindestens 15%. Dieser Materialkennwert bezeichnet die Verlängerung der Probe nach dem Bruch bezogen auf die Anfangsmesslänge der Probe. Durch die hohe Bruchdehnung, die an dem Rohrelement vorliegt, ist eine hohe Duktilität gegeben und den Beanspruchungen beim Betrieb des Pneumatik- oder Hydrauliksystems oder Transportsystems kann daher standgehalten werden. Die Bruchdehnung A5 bezieht sich auf eine Probe, bei der die Anfangslänge der Probe, die einen Rundstab darstellt, fünfmal dem Anfangsdurchmesser der Probe entspricht. L₀ =5 * do.

Die Kerbschlagarbeit des Rohrelementes wurde mittels des Charpy-Kerbschlagbiegeversuches ermittelt. Insbesondere wurde eine Probe mit V-förmiger Kerbe verwendet.

Insbesondere bei Transportrohren kann die erfindungsgemäße Kerbschlagarbeit bei niedrigen Temperaturen besonders vorteilhaft genutzt werden, da Transportsysteme beispielsweise in Gebieten mit tiefen Temperaturen eingesetzt werden.

Obwohl Transportrohre in der Regel in nicht andauernd hohen Drücken ausgesetzt sind, sind diese im Förderbetrieb des Transportsystems einem erhöhten Druck sowie Schwelldruckbeanspruchungen durch die angeschlossenen Pumpen oder durch Turbulenzen in dem geförderten Medium ausgesetzt. Diesen Beanspruchungen kann das erfindungsgemäße Rohr aufgrund seiner Eigenschaften standhalten und das Transportsystem kann daher sicher betrieben werden.

Gemäß einer Ausführungsform ist das Rohrelement ein nahtloses, insbesondere warmgewalztes und kaltgezogenes Rohrelement. Gemäß einer weiteren Ausführungsform ist das Rohrelement ein geschweißtes Rohrelement.

Gemäß einer bevorzugten Ausführungsform besteht das Rohrelement aus einem bainitischen, lufthärtenden Werkstoff. Hierdurch können zum einen durch das überwiegend bainitische Gefüge des Werkstoffes die erfindungsgemäß geforderten Kennwerte auf einfache Weise erfüllt werden. Zum anderen kann dadurch, dass die Kennwerte durch Abkühlung an Luft eingestellt werden können, die Herstellung des Rohrelementes vereinfacht werden. Insbesondere ist eine aufwändige Wärmebehandlung des Rohrelementes, wie dies beispielsweise bei Vergütungsstahl notwendig wäre, nicht erforderlich.

Da das Gefüge, insbesondere das Mikrogefüge, des Werkstoffes, aus dem das Rohrelement hergestellt ist, bainitisch ist, das heißt zum überwiegenden Teil, beispielsweise zu 60% aus Bainit besteht, kann sichergestellt werden, dass das Rohrelement auch pulsierenden Drücken, insbesondere einer Innendruckschwellbelastung, standhalten kann. Im Gegensatz zu Rohrelementen, bei denen zur Steigerung der Festigkeit des Rohrelementes eine dickere Wandstärke verwendet werden muss, kann diese bei der vorliegenden Erfindung aufgrund des Gefüges und der Zugfestigkeit des Rohrelementes gering gehalten werden. Zudem ist die Herstellung der zur Fertigung einer Hydraulik / Pneumatikleitung oder Transportleitung erforderlichen Rohrelemente, beispielswiese durch Zieh- oder Biegevorgänge möglich, da die Werkstoffkennwerte des Werkstoffes des Rohrelementes solche Umformvorgänge zulassen.

Bei bekannten bainitischen Werkstoffen, die eine hohe Streckgrenze und Kerbschlagarbeit aufweisen, ist es erforderlich einen hohen Gehalt an Restaustenit einzustellen. Dieser kann beispielsweise bis zu 20% betragen. Beispiele hierfür sind (CBF (Carbide-free Bainit) - und TBF (TRIP-aided Bainitic Ferrite)-Stähle). Um die geforderten Kennwerte zu erzielen ist bei diesen Stählen allgemein eine teuere, aufwändige und technisch schwierig zu realisierende Wärmebehandlung erforderlich, um die gewünschte Menge Restaustenit bis Raumtemperatur zu stabilisieren. Diese Wärmebehandlung setzt eine aufwändige Prozessregelung voraus und ist in üblichen Produktionsanlagen von Werken zur Rohrherstellung schwierig prozesssicher umsetzbar. Da bei dem erfindungsgemäß vorzugsweise verwendeten Gefüge die Werkstoffkennwerte maßgeblich durch den Bainitanteil bedingt sind und ein Gehalt an Restaustenit wie im Stand der Technik nicht zwingend erforderlich ist, kann die Herstellung des Rohrelementes vereinfacht werden und insbesondere können die Herstellungskosten verringert werden.

Gemäß einer Ausführungsform besitzt das Rohrelement ein Gefüge, das aus mindestens 60% Bainit, Rest Ferrit und/oder Martensit und/oder Restaustenit besteht. Insbesondere besteht der Rest aus mindestens 10% Ferrit, vorzugsweise mindestens 15% Ferrit, und maximal 20%, vorzugsweise maximal 10%, Martensit und/oder Restaustenit. Die Prozentangaben stellen insbesondere Flächenprozente dar.

Gemäß einer Ausführungsform stellt das Rohrelement ein Hydraulikrohr oder Pneumatikrohr dar. Als Hydraulikrohr wird ein Rohr bezeichnet, das zumindest einen Teil einer Hydraulikleitung bildet. Als Pneumatikrohr wird ein Rohr bezeichnet, das zumindest einen Teil einer Pneumatikleitung bildet. Durch die erfindungsgemäßen Eigenschaften kann somit die Wandstärke der entsprechenden Leitung in zumindest einem Teil der Leitungslänge verringert werden oder der Betriebsdruck des Systems, in dem die Leitung eingesetzt wird, gesteigert werden. Das erfindungsgemäße Rohrelement kann vorzugsweise in dem in einer Pneumatikleitung integrierten Zustand Drücken von 2 bis 6 bar oder höheren Drücken von beispielsweise 10 bar standhalten. Auch den in einer Hydraulikrohrleitung zu erwartenden Drücke, von beispielsweise mehr als 100 bar, vorzugsweise mehr als 200 bar, beispielsweise im Bereich von 420 - 470 bar kann das erfindungsgemäß verwendete Rohrelement in der Leitung standhalten. Zudem ist die bei dem erfindungsgemäßen Rohrelement hohe Kerbschlagarbeit Av insbesondere bei Hydraulikrohrleitungen vorteilhaft.

Gemäß einer Ausführungsform stellt das Rohrelement ein Transportrohr dar. Als Transportrohr wird ein Rohr bezeichnet, das zumindest einen Teil einer Transportleitung bildet. Durch die erfindungsgemäßen Eigenschaften kann somit die Wandstärke der entsprechenden Leitung in zumindest einem Teil der Leitungslänge verringert werden oder der Betriebsdruck des Systems, in dem die Leitung eingesetzt wird, gesteigert werden. Die Transportleitung stellt vorzugsweise eine Transportleitung zum Befüllen und Entleeren eines Transportbehälters, insbesondere eines Transportbehälters eines Frachters oder Tankers dar. Das Medium, das durch die Transportleitung transportiert, insbesondere gefördert wird, ist vorzugsweise ein flüssiges Medium. Als Medien kommen beispielsweise Öl, Wasser, chemische Flüssigkeiten, wie Säuren, und dergleichen in Betracht.

Gemäß einer Ausführungsform weist das Rohrelement an zumindest einem Ende eine Verbindungsvorrichtung auf. Die Verbindungsvorrichtung kann an das Rohrelement angeformt, angebracht oder durch einen Teil der Länge des Rohrelementes selber gebildet sein. Ein solches Vorsehen einer Verbindungsvorrichtung ist bei Beibehaltung der vorteilhaften Eigenschaften des erfindungsgemäßen Rohrelementes möglich.

Die Verbindungsvorrichtung kann gemäß einer Ausführungsform ein Gewinde umfassen. Hierdurch wird es möglich auf einfache Weise eine Hydraulikleitung oder Pneumatikleitung oder Transportleitung aus den erfindungsgemäßen Rohrelementen herzustellen, da diese einfach miteinander verschraubt werden können. Zudem kann durch die Verwendung einer Verbindungsvorrichtung, die ein Gewinde umfasst, sichergestellt werden, dass auch an der Verbindung einzelner Rohrelemente den Anforderungen, wie beispielsweise einem hohen Innendruck standgehalten werden kann.

Indem vorzugsweise an dem Rohrelement eine Verbindungsvorrichtung, besonders bevorzugt eine Verbindungsvorrichtung mit einem Gewinde vorgesehen ist, kann die Länge der einzelnen Rohrelemente zur Herstellung einer Hydraulik- oder Pneumatikleitung oder Transportleitung gering gehalten werden und damit Bedingungen am Einbauort der Leitung Rechnung getragen werden.

Die Verbindungsvorrichtung, die ein Gewinde umfasst, kann beispielsweise eine Aufdickung mit Innengewinde oder einen Schneidring mit Gewindeaufsatz umfassen. Erfindungsgemäß ist es aber auch möglich, dass das Gewinde oder eine andere Verbindungsvorrichtung an das Rohrelement angeschweißt oder in darin eingepresst ist.

Das erfindungsgemäße Rohrelement weist eine verbesserte Oberflächengüte aus, wodurch eine Beschichtung des Rohrelementes möglich wird. Das Rohrelement kann daher erfindungsgemäß beschichtet sein. Hierdurch kann die Korrosionsbeständigkeit des Rohrelementes weiter verbessert werden. Zudem kann das Rohrelement auch gegen mechanische Beschädigung, beispielsweise durch Steinschlag, geschützt werden. Die Beschichtung kann beispielsweise eine Verzinkung, Kunststoffbeschichtung, Lackierung oder dergleichen sein. Rohrelemente, die in Pneumatikrohrleitungen eingesetzt werden, können beispielsweise innen und außen verzinkt sein.

Der Außendurchmesser des Rohrelementes liegt beispielsweise im Bereich von 3 bis 115 mm, vorzugsweise 4 bis 80 mm oder 4 bis 45 mm. Mit diesen geringen Abmessungen, kann die aus dem oder den Rohrelementen hergestellte Hydraulik- oder Pneumatikleitung an unterschiedlichen Orten, beispielsweise an einem Fahrzeug oder einer Werkzeugmaschine, wie beispielsweise einer Presse, verwendet werden.

Gemäß einer Ausführungsform liegt das Verhältnis Außendurchmesser zu Innendurchmesser des Rohrelementes im Bereich von 1 bis 5, vorzugsweise im Bereich von 2 bis 4. Hierdurch kann den Anforderungen, die an Pneumatik- und Hydraulikrohrleitungen gestellt werden, Rechnung getragen werden.

Gemäß einer Ausführungsform ist das Rohrelement zumindest bereichsweise gebogen. Vorzugsweise wird das Rohrelement vor der Verwendung in einer Hydraulik- oder Pneumatikleitung oder Transportleitung gebogen. Mit dem erfindungsgemäßen Rohrelement ist ein solches Biegen möglich, wobei die mechanischen Eigenschaften des erfindungsgemäßen Rohres zumindest weitestgehend bestehen bleiben. Indem das Rohrelement gebogen sein kann, können auch komplexe Strukturen einer Hydraulik- oder Pneumatikleitung oder Transportleitungen mit dem erfindungsgemäßen Rohrelement erzeugt werden.

Gemäß einer bevorzugten Ausführungsform besteht das mindestens eine Rohrelement aus einem Stahlwerkstoff auf Eisenbasis, der in Gewichtsprozent die folgenden Legierungselemente umfasst:

| | |
|---|---|
| C | 0,06 - 0,15% |
| Mn | 1,0 - 3,0% |
| Si | 0,4 - 2,0% |
| Cr | > 0,4% und maximal 2,0% |
| Nb | 0,001 - 0,1% |
| Al | maximal 0,25% |
| N | 0,001 - 0,1%. |

Zusätzlich können in dem Stahlwerkstoff, der im Folgenden auch als Werkstoff bezeichnet wird, unvermeidbare Verunreinigungen vorliegen.

Kohlenstoff C liegt erfindungsgemäß bis maximal 0,15 Gew.% vor. Hierdurch kann die Zementitbildung Fe₃C in dem Stahlwerkstoff gering gehalten werden und eine ausreichende Zähigkeit der Hydraulikleitung oder Pneumatikleitung oder Transportleitung wird sichergestellt. Erfindungsgemäß kann aber auch ein Kohlenstoffgehalt von bis zu maximal 0,13% ausreichen, um diese Eigenschaften einzustellen.

Silizium Si wird in einer Menge von mindestens 0,4 Gew.-% zugegeben. Es ist auch möglich Silizium in einer Menge von mindestens 0,5% Gew.-% zuzugeben. Durch diese Zugabe kann zum einen eine ausreichende Bainitbildung erzielt werden und zum anderen dient auch Silizium dazu die Fe₃C-Bildung zu unterdrücken. Zudem dient die Zugabe von Silizium der Erhöhung der Streckgrenze durch Mischkristallbildung.

Mangan Mn wird in einer Menge von mindestens 1,0 Gew.-% zugegeben. Auch hierdurch werden die Durchhärtbarkeit und eine ausreichende Bainitbildung in dem Werkstoff gewährleistet. Bevorzugt können mindestens 1,6 Gew.-% Mangan und weiter bevorzugt mindestens 1,9 Gew.-% Mangan vorgesehen werden, wodurch Zugfestigkeit und Streckgrenze erhöht werden können.

Stickstoff kann auch in einer geringeren Menge als dem angegebenen Mindestgehalt von 0,001 Gew.-% vorliegen oder in dem Werkstoff nicht enthalten sein. Ein Mindestgehalt von Stickstoff N von 0,001 Gew.-% ist aber vorteilhaft, um eine für eine Zähigkeitserhöhung durch Kornfeinung notwendige Niob-Karbonitridbildung zu ermöglichen.

Chrom kann erfindungsgemäß auch in einer geringeren Menge als der angegebenen Untergrenze von 0,4 Gew.-% vorliegen. Die Untergrenze von Chrom kann daher beispielsweise auch mit 0 Gew.-% angegeben werden. Gemäß der bevorzugten Ausführungsform wird Chrom Cr allerdings in eine Menge von mehr als >0,4 Gew.-% zugegeben. Hierdurch kann eine Anlassbeständigkeit des Werkstoffes und damit des Rohrelementes der Pneumatik- oder Hydraulikleitung oder Transportleitung erzielt werden. Zudem wird die Durchhärtbarkeit durch die Zugabe von Chrom verbessert. Gemäß der bevorzugten Ausführungsform, wird Chrom allerdings maximal bis zu 2 Gew.-% zugegeben. Hierdurch kann eine ausreichende Kerbschlagarbeit und - zähigkeit gewährleistet werden, insbesondere da eine Nitridbildung oder Carbidbildung bei diesen relativ geringen Gehalten an Chrom vermieden werden kann. Zudem sind die Kosten für den Werkstoff des Rohrelementes bei einer Begrenzung des Chromgehaltes auf maximal 2 Gew.-% geringer.

Niob kann in dem vorzugsweise verwendeten Werkstoff in geringeren Mengen als dem angegebenen Mindestgehalt von 0,001 Gew.-% vorliegen und gegebenenfalls nicht in dem Werkstoff enthalten sein. Vorzugsweise ist aber mindestens 0,001 Gew.-% Niob in dem Werkstoff enthalten. Gemäß einer bevorzugten Ausführungsform beträgt der Gehalt an Niob in dem erfindungsgemäß verwendeten Werkstoff mindestens 0,01 Gew.-%. Durch diese Zugabe von Niob kann eine gute Kornfeinung in dem Werkstoff erzielt werden und so die erfindungsgemäßen Eigenschaften zuverlässig eingestellt werden.

Gemäß einer bevorzugten Ausführungsform liegt der Aluminiumgehalt bei mindestens 0,03 Gew.-%. Durch diesen Aluminiumgehalt kann eine bainitische Umwandlung unterstützt werden. Liegt der Aluminiumgehalt unter diesem Gehalt kann es dazu kommen, dass die bainitische Umwandlung zu langsam abläuft und daher der vorzugsweise angestrebte Bainitgehalt nicht auf einfache Weise eingestellt werden kann.

Während Aluminium ein optionales Element des Werkstoffes sein kann, sind die weiteren Legierungselemente des erfindungsgemäß verwendeten Werkstoffes vorzugsweise Musskomponenten des Werkstoffes, um mit diesem Werkstoff die gewünschten Eigenschaften zuverlässig erzielen zu können.

Zudem ist darauf hinzuweisen, dass der erfindungsgemäß verwendete Stahlwerkstoff aufgrund der zwingend enthaltenen Legierungselemente, die vergleichsweise kostengünstig sind, einen kostengünstigen Werkstoff darstellt, mit dem dennoch zuverlässig die erfindungsgemäßen Eigenschaften des Rohrelementes und daraus hergestellten Hydraulik- oder Pneumatikleitung oder Transportleitung eingestellt werden können.

Die Erfindung betrifft gemäß einem weiteren Aspekt eine Verwendung eines erfindungsgemäßen Rohrelementes als Teil einer Hydraulikleitung oder Pneumatikleitung oder als Teil einer Transportleitung.

Die Vorteile, die bezüglich des erfindungsgemäßen Rohrelementes beschrieben wurden und werden, gelten für die erfindungsgemäße Verwendung - soweit anwendbar - entsprechend.

Gemäß einem weiteren Aspekt betrifft die vorliegende Erfindung die Verwendung eines Werkstoffes zur Herstellung eines Rohrelementes einer Hydraulikleitung oder Pneumatikleitung. Der Werkstoff stellt einen Stahlwerkstoff auf Eisenbasis dar, der in Gewichtsprozent die folgenden Legierungselemente umfasst:

| | |
|---|---|
| C | 0,06 - 0,15% |
| Mn | 1,0 - 3,0% |
| Si | 0,4 - 2,0% |
| Cr | > 0,4% und maximal 2,0% |
| Nb | 0,001 - 0,1% |
| Al | maximal 0,25% |
| N | 0,001 - 0,1%. |

Gemäß einem weiteren Aspekt betrifft die vorliegende Erfindung die Verwendung eines Werkstoffes zur Herstellung eines Rohrelementes einer Transportleitung. Der Werkstoff stellt einen Stahlwerkstoff auf Eisenbasis dar, der in Gewichtsprozent die folgenden Legierungselemente umfasst:

| | |
|---|---|
| C | 0,06 - 0,15% |
| Mn | 1,0 - 3,0% |
| Si | 0,4 - 2,0% |
| Cr | > 0,4% und maximal 2,0% |
| Nb | 0,001 -0,1% |
| Al | maximal 0,25% |
| N | 0,001 - 0,1%. |

Die Vorteile und Merkmale der Verwendung dieses Stahlwerkstoffes wurden bereits unter Bezugnahme auf das Rohrelement beschrieben.

Der Werkstoff kann als optionale Legierungselemente mindestens eines der folgenden Elemente enthalten: Vanadium, Titan, Bor, Nickel, Molybdän und Aluminium.
Zumindest eines der folgenden Legierungselemente: Vanadium, Titan, Bor, Nickel, Molybdän kann als optionales Legierungselement verwendet werden. Diese Legierungselemente liegen, sofern vorhanden, vorzugsweise in den folgenden Mengen in Gewichtsprozent vor:

| | |
|---|---|
| V | maximal 0,15 |
| Ti | maximal 0,1 |
| B | maximal 0,005 |
| Ni | maximal 2,0 |
| Mo | maximal 0,5. |

Eine mögliche chemische Zusammensetzung eines Stahlwerkstoffes ist im Folgenden angegeben, die außer Eisen und unvermeidbaren Verunreinigungen in Gewichtsprozent die folgenden Legierungselemente in den angegebenen Bereichen aufweist:

| | |
|---|---|
| C | 0,06 - 0,13 |
| Mn | 1,9 - 3,0 |
| Si | 0,5 - 2,0 |
| Cr | 0,4 - 2,0 |
| Nb | 0 - 0,10 |
| V | 0 - 0,15 |
| Al | 0 - 0,25 |
| N | 0 - 0,1 |

Ein Beispiel der Zusammensetzung des erfindungsgemäß verwendeten Werkstoffes, ist ein Werkstoff, der außer Eisen und unvermeidbaren Verunreinigungen die folgenden Legierungselemente in den angegebenen Mengen in Gew.-% aufweist:

| | |
|---|---|
| C | 0,08 |
| Mn | 2,28 |
| Si | 0,72 |
| Cr | 1,2 |
| Nb | 0,03 |
| Al | 0,03 |
| N | 0,008 |

Ein weiteres Beispiel der Zusammensetzung des erfindungsgemäß verwendeten Werkstoffes, ist ein Werkstoff, der außer Eisen und unvermeidbaren Verunreinigungen die folgenden Legierungselemente in den angegebenen Mengen in Gew.-% aufweist:

| | |
|---|---|
| C | 0,10 |
| Mn | 2,23 |
| Si | 0,80 |
| Cr | 1,15 |
| Nb | 0,029 |
| Al | 0,033 |
| N | 0,011 |

Mit einem solchen Werkstoff konnten die folgenden Kennwerte erzielt werden: Rp0.2 >= 550MPa, Rm >= 850 MPa, A5 > 15%, Av (0°C)>=27J. Diese Kennwerte liegen beispielsweise in dem Zustand AR (wie gewalzt) vor.

Gemäß einer Ausführungsform ist das Rohrelement ein warmgeformtes und anschließend an Luft gekühltes nahtloses Rohrelement. Bei der Herstellung des Rohrs beziehungsweise bei der Warmumformung wird hierbei das Rohr, aus dem das Rohrelement gefertigt wird, auf eine Temperatur, die oberhalb der Ac3-Temperatur des Werkstoffes liegt, erwärmt. In der bevorzugten Ausführungsform wird das Rohrelement ohne anschließende Wärmebehandlung nach der Warmumformung hergestellt. Es hat sich gezeigt, dass dennoch die erfindungsgemäßen Eigenschaften des Rohrelementes eingestellt werden können.

Gemäß einer Ausführungsform wird das Rohrelement so hergestellt, dass bei der Warmumformung eine mittlere Austenitkorngröße von weniger als 50µm eingestellt wird. Anschließend wird das Rohrelement an Luft abgekühlt. Die Abkühlung kann an bewegter oder ruhender Luft stattfinden. Insbesondere wird die Abkühlung so durchgeführt, dass der Temperaturbereich zwischen 800°C und 500°C mit einer Kühlrate von 0,1 bis 8,0 °C/s durchlaufen wird.

Hierdurch kann ein feinkörniges und gleichmäßiges Gefüge erzielt werden, dessen Festigkeits- und Zähigkeitseigenschaften weiter verbessert sind.

Vorteile und Merkmale, die bezüglich des Pneumatikrohres, des Hydraulikrohres, des Transportrohres oder der Verwendungen beschrieben werden, gelten, soweit anwendbar auch für den jeweils anderen Gegenstand und werden daher gegebenenfalls nur einmalig beschrieben.

Im Folgenden werden zwei Ausführungsformen eines Rohrelementes gemäß der vorliegenden Erfindung anhand der beiliegenden Figuren beschrieben.
Figur 1: zeigt eine schematische Darstellung einer Ausführungsform des erfindungsgemäßen Rohrelementes,
Figur 2: zeigt eine Schnittansicht durch das Rohrelement nach Figur 1,
Figur 3: zeigt eine schematische Darstellung einer Ausführungsform des erfindungsgemäßen Rohrelementes, und
Figur 4: zeigt eine Schnittansicht durch das Rohrelement nach Figur 3.

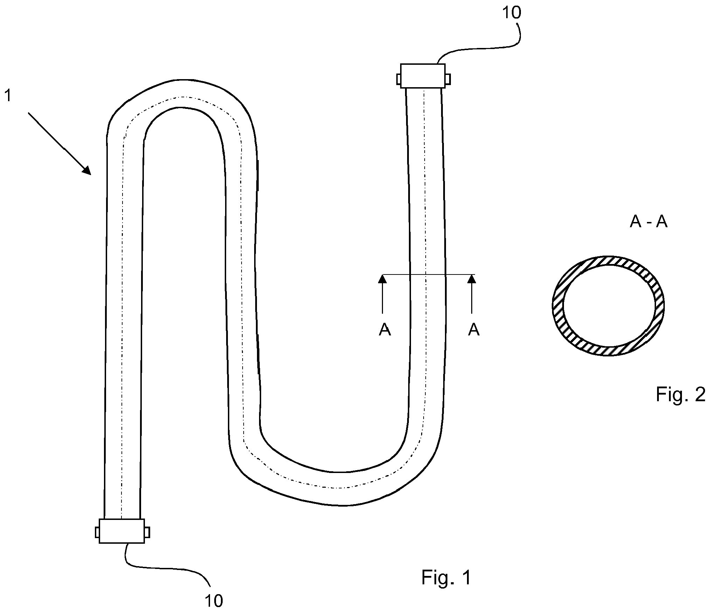

In Figur 1 ist eine erste Ausführungsform eines Rohrelementes 1 gezeigt. In dieser Ausführungsform ist das Rohrelement 1 an zwei Positionen um jeweils 180° gebogen und bildet so einen schlangenförmigen Verlauf. An den Enden des Rohrelementes 1 ist jeweils eine Verbindungsvorrichtung vorgesehen, die in der dargestellten Ausführungsform einen Schneidring mit Gewindeaufsatz 10 darstellt. Wie sich aus der Schnittansicht entlang der Schnittlinie A-A in Figur 1, die in Figur 2 gezeigt ist, ergibt, stellt das Rohrelement 1 ein dünnwandiges Rohrelement 1 dar.

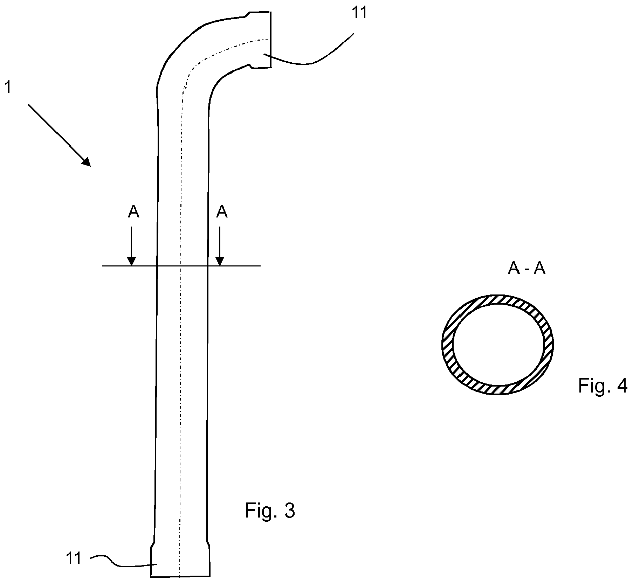

In Figur 3 ist eine zweite Ausführungsform eines Rohrelementes 1 gezeigt. In dieser Ausführungsform ist das Rohrelement 1 an einer Position um 90° gebogen. An den Enden des Rohrelementes 1 ist jeweils eine Verbindungsvorrichtung vorgesehen, die in der dargestellten Ausführungsform eine Aufdickung 11 darstellt. In die Aufdickung 11 ist ein Gewinde, beispielsweise in Innengewinde, eingebracht oder kann ein Gewinde eingebracht werden. Wie sich aus der Schnittansicht entlang der Schnittlinie A-A in Figur 3, die in Figur 4 gezeigt ist, ergibt, stellt das Rohrelement 1 ein dünnwandiges Rohrelement 1 dar.

Bei der vorliegenden Erfindung wird vorzugsweise ein kostengünstiger Werkstoff verwendet, mit dem dennoch eine Streckgrenze von >= 550 MPa, eine Zugfestigkeit von >=850MPa und einer Kerbschlagarbeit >= 27J bei 0°C in dem Rohrelement erreicht wird und der zur Herstellung nahtloser Rohre ohne nachfolgende Wärmebehandlung geeignet ist.

Die Erfindung weist eine Reihe von Vorteilen auf. Zum einen ist Leichtbaupotential für Hydraulik- und Pneumatikanwendungen und Transportsysteme aufgrund der deutlich höheren Streckgrenze beziehungsweise Zugfestigkeit (>=550MPa bzw. 850 MPa) gegenüber dem aktuellen Stand der Technik (>=500 MPa bzw. 700 MPa). Insbesondere kann aufgrund der höheren Streckgrenze die Wanddicke des Rohrelementes verringert werden und dadurch das Gesamtgewicht der aus dem Rohrelement hergestellten Hydraulikleitung oder Pneumatikleitung oder Transportleitung gesenkt werden. Zudem können durch die Verwendung des erfindungsgemäßen Rohrelementes auch die Belastungsdrücke erhöht und dadurch die Systemleistung des Systems in dem die Hydraulikleitung oder Pneumatikleitung oder Transportleitung enthalten ist, erhöht werden.

### Bezugszeichenliste

- 1: Rohrelement
- 10: Schneidring
- 11: Aufdickung

## Patentansprüche

1. Rohrelement für eine Hydraulik-Leitung oder Pneumatik-Leitung, **dadurch gekennzeichnet, dass** das Rohrelement aus einem bainitischen Werkstoff besteht und das Rohrelement (10) eine Dehngrenze Rp0,2 von mindestens 550 MPa, eine Zugfestigkeit Rm von mindestens 850 MPa, eine Bruchdehnung A5 von mindestens 15% und eine Kerbschlagarbeit Av bei 0°C von mindestens 27 J aufweist.

2. Rohrelement für eine Transportleitung, **dadurch gekennzeichnet, dass** das Rohrelement aus einem bainitischen Werkstoff besteht und das Rohrelement (10) eine Dehngrenze Rp0,2 von mindestens 550 MPa, eine Zugfestigkeit Rm von mindestens 850 MPa, eine Bruchdehnung A5 von mindestens 15% und eine Kerbschlagarbeit Av bei 0°C von mindestens 27 J aufweist.

3. Rohrelement nach Anspruch 1 oder 2, **dadurch gekennzeichnet, dass** das Rohrelement (10) ein nahtloses, insbesondere kaltgezogenes Rohrelement oder ein geschweißtes Rohrelement ist.

4. Rohrelement nach einem der Ansprüche 1 bis 3, **dadurch gekennzeichnet, dass** das Rohrelement (10) aus einem bainitischen, lufthärtenden Werkstoff besteht.

5. Rohrelement nach einem der Ansprüche 1 bis 4, **dadurch gekennzeichnet, dass** das Rohrelement (10) ein Gefüge besitzt, das aus mindestens 60% Bainit, Rest Ferrit und/oder Martensit und/oder Restaustenit besteht.

6. Rohrelement nach Anspruch 5, **dadurch gekennzeichnet, dass** der Ferritanteil mindestens 10% und der Martensit / Austenitanteil maximal 20% beträgt.

7. Rohrelement nach einem der Ansprüche 1 bis 6, **dadurch gekennzeichnet, dass** das Rohrelement (10) an zumindest einem Ende eine Verbindungsvorrichtung aufweist.

8. Rohrelement nach Anspruch 7, **dadurch gekennzeichnet, dass** die Verbindungsvorrichtung ein Gewinde umfasst.

9. Rohrelement nach einem der Ansprüche 7 oder 8, **dadurch gekennzeichnet, dass** die Verbindungsvorrichtung eine Aufdickung (11) mit Innengewinde oder einen Schneidring mit Gewindeaufsatz (10) umfasst.

10. Rohrelement nach einem der Ansprüche 1 bis 9, **dadurch gekennzeichnet, dass** der Außendurchmesser des Rohrelementes (10) im Bereich von 3 bis 115mm, vorzugsweise 4 bis 80mm oder 4 bis 45mm liegt.

11. Rohrelement nach einem der Ansprüche 1 bis 10, **dadurch gekennzeichnet, dass** das Außendurchmesser-zu-Innendurchmesser-Verhältnis im Bereich von 1 bis 5, vorzugsweise im Bereich von 2 bis 4 liegt.

12. Rohrelement nach einem der Ansprüche 1 bis 11, **dadurch gekennzeichnet, dass** das Rohrelement (10) zumindest bereichsweise gebogen ist.

13. Rohrelement nach einem der Ansprüche 1 bis 12, **dadurch gekennzeichnet, dass** das mindestens eine Rohrelement (10) aus einem Stahlwerkstoff auf Eisenbasis besteht, der in Gewichtsprozent die folgenden Legierungselemente umfasst:
| | |
|---|---|
| C | 0,06 - 0,15% |
| Mn | 1,0 - 3,0% |
| Si | 0,4 - 2,0% |
| Cr | > 0,4% und maximal 2,0% |
| Nb | 0,001 - 0,1% |
| Al | maximal 0,25% |
| N | 0,001 -0,1 %. |

14. Rohrelement nach einem der Ansprüche 1, 3 bis 13, **dadurch gekennzeichnet, dass** das Rohrelement (10) ein Hydraulikrohr oder Pneumatikrohr darstellt.

15. Rohrelement nach einem der Ansprüche 2 bis 13, **dadurch gekennzeichnet, dass** das Rohrelement (10) ein Transportrohr darstellt.

16. Verwendung eines Rohrelementes nach einem der Ansprüche 1, 3 bis 14, **dadurch gekennzeichnet, dass** das Rohrelement (10) als Teil einer Hydraulikleitung oder Pneumatikleitung verwendet wird.

17. Verwendung eines Rohrelementes nach einem der Ansprüche 2 bis 13 oder 14, **dadurch gekennzeichnet, dass** das Rohrelement (10) als Teil einer Transportleitung verwendet wird.

18. Verwendung eines Werkstoff zur Herstellung eines Rohrelementes (10) für eine Hydraulikleitung oder Pneumatikleitung, **dadurch gekennzeichnet, dass** der Werkstoff einen Stahlwerkstoff auf Eisenbasis darstellt, der in Gewichtsprozent die folgenden Legierungselemente umfasst:
| | |
|---|---|
| C | 0,06 - 0,15% |
| Mn | 1,0 - 3,0% |
| Si | 0,4 - 2,0% |
| Cr | > 0,4% und maximal 2,0% |
| Nb | 0,001 -0,1% |
| Al | maximal 0,25% |
| N | 0,001 - 0,1 %. |

19. Verwendung eines Werkstoff zur Herstellung eines Rohrelementes (10) für eine Transportleitung, **dadurch gekennzeichnet, dass** der Werkstoff einen Stahlwerkstoff auf Eisenbasis darstellt, der in Gewichtsprozent die folgenden Legierungselemente umfasst:
| | |
|---|---|
| C | 0,06 - 0,15% |
| Mn | 1,0 - 3,0% |
| Si | 0,4 - 2,0% |
| Cr | > 0,4% und maximal 2,0% |
| Nb | 0,001 -0,1% |
| Al | maximal 0,25% |
| N | 0,001 - 0,1 %. |

20. Verwendung nach Anspruch 18 oder 19, **dadurch gekennzeichnet, dass** der Gehalt an Niob mindestens 0,01 Gew.-% beträgt.

21. Verwendung nach einem der Ansprüche 18 bis 20, **dadurch gekennzeichnet, dass** als optionale Legierungselemente mindestens eines der folgenden Elemente enthalten ist: Vanadium, Titan, Bor, Nickel, Molybdän und Aluminium.

22. Verwendung nach einem der Ansprüche 18, 20 oder 21, **dadurch gekennzeichnet, dass** das Rohrelement ein Rohrelement einer Hydraulikleitung oder Pneumatikleitung für ein Kraftfahrzeug oder einer stationären oder mobilen Anlage ist.

23. Verwendung nach einem der Ansprüche 19 bis 21, **dadurch gekennzeichnet, dass** das Rohrelement ein Rohrelement einer Transportleitung für ein Frachtschiff, insbesondere einen Tanker ist.
